# EUROPEAN PATENT SPECIFICATION

(11) **EP 1 418 570 B1**
(45) Date of publication and mention of the grant of the patent: **21.03.2007**
(21) Application number: 02024764.9
(22) Date of filing: 06.11.2002
(51) Int. Cl.: G10L 15/00, G10L 15/06, G10L 15/18

(54) **Cross-lingual speech recognition method**
Verfahren zur mehrsprachigen Spracherkennung
Méthode de reconnaissance de parole multi-langues

(43) Date of publication of application: 12.05.2004
(73) Proprietor: Swisscom Fixnet AG, 3050 Bern (CH)
(72) Inventor: Van Kommer,Robert, 1752 Villar-sur-Gläne (CH); Marti, Urs-Viktor, 3018 Bern (CH)
(74) Representative: P&TS Patents & Technology Surveys SA

(56) References cited:
- EP-A- 1 239 459
- HUMPHRIES J J ET AL: "The use of accent-specific pronunciation dictionaries in acoustic model training" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 317-320, XP010279124 ISBN: 0-7803-4428-6
- VITALE T: "An algorithm for high accuracy name pronunciation by parametric speech synthesizer" COMPUTATIONAL LINGUISTICS, SEPT. 1991, USA, vol. 17, no. 3, pages 257-276, XP002237797 ISSN: 0891-2017
- LIU WAI KAT ET AL: "Fast accent identification and accented speech recognition" ACOUSTICS, SPEECH, AND SIGNAL PROCESSING, 1999. PROCEEDINGS., 1999 IEEE INTERNATIONAL CONFERENCE ON PHOENIX, AZ, USA 15-19 MARCH 1999, PISCATAWAY, NJ, USA,IEEE, US, 15 March 1999 (1999-03-15), pages 221-224, XP000898298 ISBN: 0-7803-5041-3
- ACKERMANN U ET AL: "SpeeData: multilingual spoken data entry" SPOKEN LANGUAGE, 1996. ICSLP 96. PROCEEDINGS., FOURTH INTERNATIONAL CONFERENCE ON PHILADELPHIA, PA, USA 3-6 OCT. 1996, NEW YORK, NY, USA,IEEE, US, 3 October 1996 (1996-10-03), pages 2211-2214, XP010238101 ISBN: 0-7803-3555-4

## Description

### Technical field

The invention relates to a cross-lingual speech recognition method. More specifically, the invention relates to a speech recognition method which is better adapted to multilingual countries and services.

### State of the art

A common task in speech processing systems is speech recognition. A speech recognition system is an automated system that receives a digital speech signal spoken by one or several speakers and determines the words and sentences that are spoken. Other common tasks include for example speaker identification, i.e. determining which one of a group of known speakers has generated a received speech signal, and speaker verification, i.e. verifying from a speech signal if the identity claimed by a speaker is correct.

Despite impressive progress in recent years, existing speech recognition systems are still insufficiently robust in non-ideal situations. One particular problem concerns pronunciation variants. Words can be pronounced in a variety of different ways and a different acoustic model should be built for each variant the system needs to recognize. The problem is especially difficult for multilingual speech recognition systems and for recognition systems that need to handle both native and non-native speech.

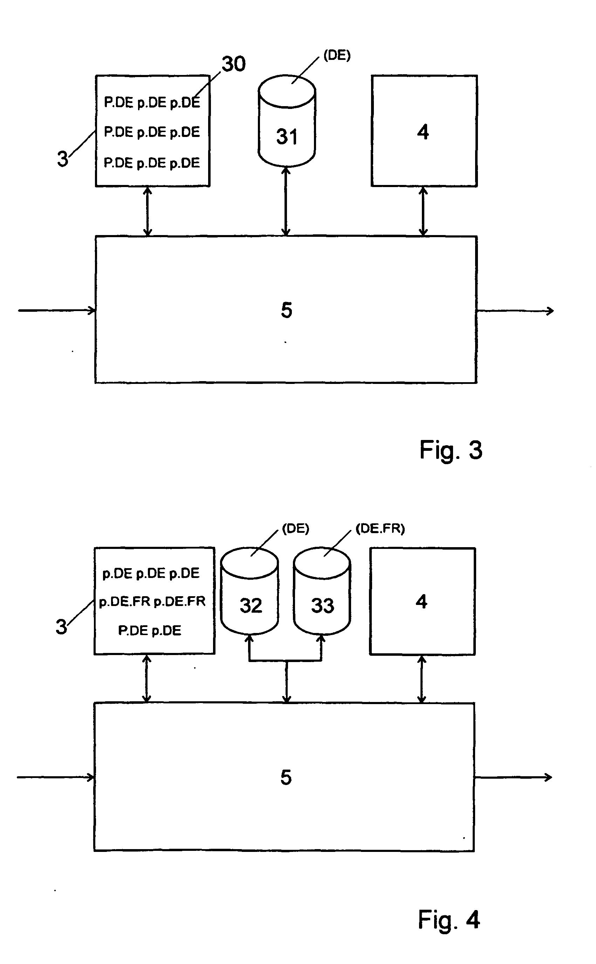

In order to improve the recognition rate of speech sequences uttered by non-native speakers, it is common to train the speech models used in the recognition systems with a set of speech data coming from a set including a large amount of native speakers and a smaller amount of non-native speakers. The speech models used in this case are mixed models, reflecting the overall probabilities of each sequence to be uttered in a particular way by a population of native and non-native speakers. This solution is illustrated in Figure 3 that schematically illustrates a speech recognition system 5 that can recognise speech sequences, for example words or sentences, listed in a dictionary 3. Each sequence is modelised with one or several phones, wherein all the phones used in all the sequences 30 in the dictionary come from a common set 31 of mixed models, i.e. speech element models trained with a representative mix of native and non-native speakers. In the figure, the sequences of phones 30 comprise a plurality of phones, each phone being represented by a single parameter p which indicates the model of phone to use in the set 31. In the illustrated example, all the speech sequences in the dictionary 3 are represented with phones modelised with German phone models, trained with a mixed set of speakers.

A problem with this approach is the large number of possible non-native accents. The likelihood of a sequence to be uttered by a non-native speaker with a specific accent is very weak, so that the recognition system 5 is unlikely to match the received speech sequence with the correct corresponding word.

It has also been suggested to model different accents separately, as illustrated with Figure 4. In this solution, each sequence 30 in the dictionary 3 comprises speech elements, for example phones, modelised by one of several sets of models 32, 33. Each phone is thus designated in the dictionary by two parameters, p which indicates the phone to use, and a second other parameter for indicating the associated set of models. In the figure, one set of models has been trained with native German speakers while the other set has been trained with non-native German speakers.

The dictionary 3 thus includes for most words one model for each accent to consider. Obviously, this solution increases the number of entries in the dictionary, and requires several complete sets of models 32, 33 to be built and trained. However, collecting large enough speech samples for each possible accent or dialect is generally not feasible. This solution is therefore very costly. Moreover, increasing the amount of possible pronunciations for each word or sequence in a dictionary dramatically increases the processing time.

The solutions described so far concern only the speakers who use a non-native language during a complete dialogue session with a speech recognition system. A different problem arises when a speaker sporadically speaks an individual foreign word or foreign phone in a sequence of words belonging to his native language. This is often the case in the context of automatic directory assistance services in multilingual countries, such as Switzerland or Canada for instance. In those countries, each linguistic part has geographical and family names originating from the plurality of linguistic origins. Moreover, in the case of Switzerland, the usage is to pronounce most names according to their linguistic origin. For instance, the name "Interlaken" is pronounced by a French speaker using the German phonetic transcription.

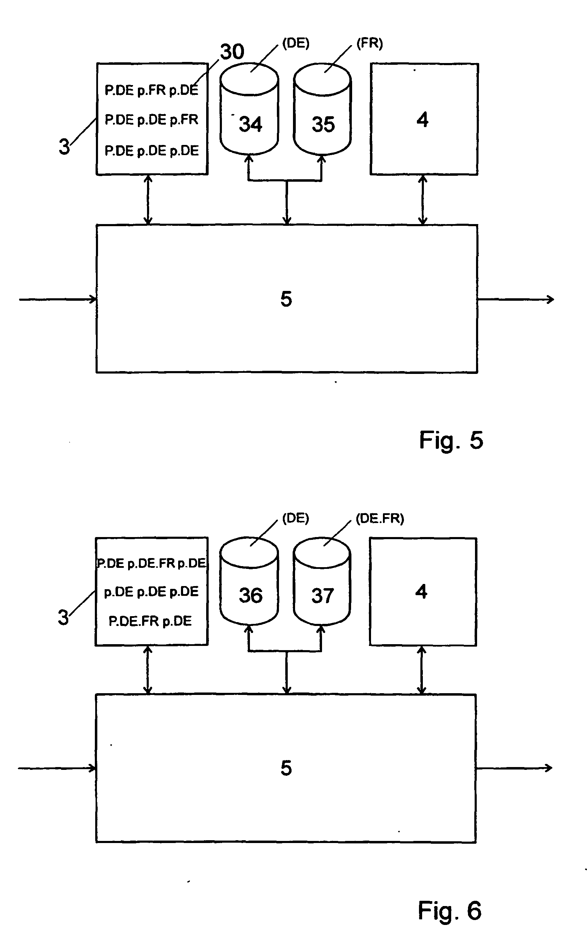

It may happen however that a necessary phone needed to pronounce a given word is not available in one given language. An example is the word "Guisanplatz"; in this case the first part of the name "Guisan" is a French name while "Platz" is a German word. Existing speech recognition systems will use a mix of German phone models trained on a German speech material with the French phone [ã] (as in the French word *enfant)* trained on French speech samples spoken by French speakers. This situation is illustrated in Figure 5 which shows that each sequence 30 in the dictionary 3 may use phones p.DE resp. p.FR from two different set of models, in the above example one German set of models 34 trained with German native speakers and a separate French set of models 35 trained with French native speakers.

Those models are often called "multingual speech recognition models". A dictionary using those models identifies each phone model with two parameters:
1. The phone model p that identifies the translation of sound to phoneme;
2. The language to which the training samples belong, for example French (.FR) or German (.DE).

For instance, the phone [a] will be identified by [a].GE for the German model of the phone [a]; and [a].FR" for the French model of the phone [a].

Unfortunately, this method is not fully satisfactory since a mismatch is introduced by the fact that, in this example, a German speaker will not pronounce the French phone [ã] in a French word or subword like a French speaker. Therefore, taking the phone model of the phone [ã] out of a set of French models trained with French speakers will not adequately represent the way German speakers pronounce this French phone.

EP-A1-1 239 459 proposes an adaptation of a speech recognizer to a non native speaker pronunciation. To increase the recognition rate and quality in a process of recognizing speech an approximative set of pronunciation rules for a current pronunciation of a current speaker is determined in a given pronunciation space and then applied to a current pronunciation lexicon so as to perform a speaker specific adaptation of said current lexicon.

The article "An algorithm for high accuracy name pronunciation by parametric sppech snythesiser", Vitali, computational linguistics, Sept. 1991 , USA, vol. 17, no. 3, p. 257 - 276, discloses how an algorithm for high accuracy name pronunciation was implemented in software based on a combination of cryptanalysis, statistics, and linguistics.

The article "Fast accent identification and accented speech recognition", Liu Wai Kat, et al., 1999 IEEE International conference on Acoustics, Speech and Signal Processing, Proceedings, Phoenix, AZ, USA, 15-19.03. 1999, piscataway, NJ, USA, p. 221-224 proposes a faster accent classification approach using phoneme-class models.

### Summary of the invention

Therefore, it is an aim of the current invention to provide an improved, more efficient cross-lingual speech recognition method.

It is another aim of the current invention to provide a cross-lingual recognition method that improves the recognition of individual foreign words, subwords or even phones in a sentence. It is another aim of the current invention to provide a cross-lingual speech recognition method that can efficiently recognize individual foreign words in sentences, without requiring complete sets of non-native speech models to be trained and stored.

It is another aim of the current invention to provide a cross-lingual speech recognition method in which the models for foreign phones or speech elements are improved.

In accordance with one embodiment of the present invention, those aims are achieved with a method for recognizing a sequence of speech elements spoken by a first language native speaker according to independent claim 1, characterized in that said cross-lingual speech elements are built from a set of first language speakers, and in that said native models and said cross-lingual models are both used for the recognition of different phones of said sequence.

In an embodiment, the sequence is made of short speech elements, such as words, subwords, triphones or small sets of words, while each speech element is for example a phone or a triphone. This allows to use for example models for German phones and models for French phones, but trained with German speakers, for the recognition of a single word or even a single triphone.

### Short description of drawings

The invention will be better understood with the help of the description of a specific embodiment illustrated by the figures in which:
- **Fig. 1**: illustrates the general structure of a speech recognition system.
- **Fig. 2**: schematically illustrates a Hidden Markov Model.
- **Fig. 3**: illustrates the architecture of a known speech recognition system using mixed speech models.
- **Fig. 4**: illustrates the architecture of a known speech recognition system using a set of speech models trained with native speakers and a second set of speech models trained with non-native speakers, each entry in the dictionary using only one of those two sets.
- **Fig. 5**: illustrates the architecture of a known speech recognition system using a first set of speech models of a first language and a second set of speech models of a second language, wherein at least some entries in the dictionary use models from both sets.
- **Fig. 6**: illustrates the architecture of a speech recognition system according to the invention, which uses a first set of speech models trained with native speakers and a second set of speech models trained with non-native speakers, wherein at least some entries in the dictionary use models from both sets.

### Detailed description of the invention

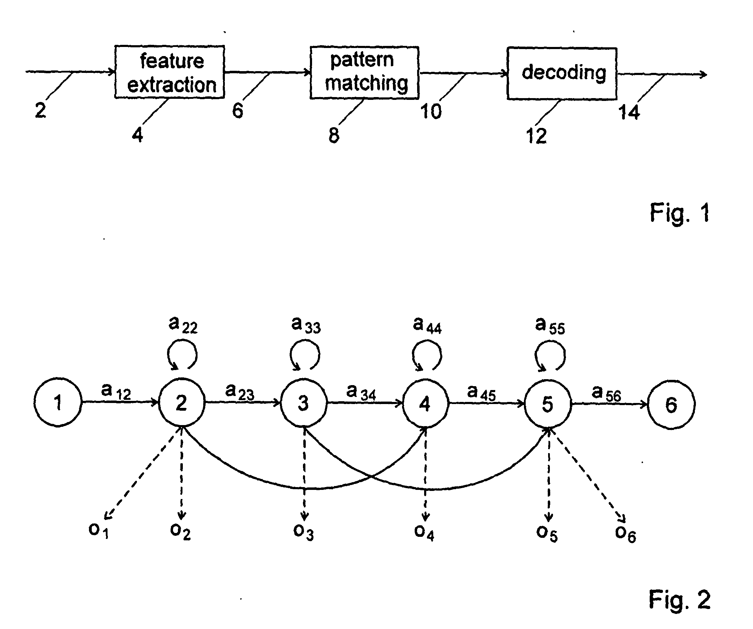

The speech processing system of the invention preferably comprises a sequence of processing blocs, as illustrated on Figure 1:

Firstly, a feature extraction bloc 4 transforms a speech signal 2 into a representation 6 better suited for the subsequent processing blocs. Speech signals 2 may be provided in digital form with different sampling rates, or in analog form, in which case they have to be converted to a digital speech signal first. The feature extraction bloc converts the frames of the digital speech signal 2 into feature vectors 6 containing a set of values representing the input frame in the time and frequency domain.

Several pre-processing steps are performed by the feature extraction bloc 4, including filtering, pre-emphasis, noise compensation and normalization. Furthermore, most feature extraction blocs convert the time-related speech signal into the frequency domain through, for instance, a Fast Fourier Transform (FFT), a wavelet transform, a Linear Prediction Code or a Filterbank. Subsequently, a mapping is often realized to include psychoacoustic compensations into the time-to-frequency transformation. Finally, post-processing techniques are often applied through adding derivatives of first and second order, and furthermore, normalization or filtering is often applied. The computed feature vectors also need to be de-correlated given the specific pattern-matching mechanism. The feature extraction bloc delivers a stream 6 of successive feature vectors corresponding to the input speech signal.

A pattern matching bloc 8, or classifier, maps the feature vectors in the data stream 6 delivered by the feature extraction bloc 4 to target speech elements. In a speech recognition system, the pattern matching bloc indicates for each feature vector, corresponding to a frame of the input speech signal, the probability 10 that it corresponds to different speech elements, for examples words, subwords, phonemes, triphones, etc.

Several types of pattern matching blocs are known, including Hidden Markov Models that use mixtures of Gaussian functions, Neural Networks, Hybrid systems, Support Vector Machines, etc. In the following sections, we will describe in more detail the special case of Hidden Markov Models, although the method of the invention could also be performed with other types of pattern matching blocs.

An example of Hidden Markov Model is shown on Figure 2. A Markov Model is a finite state machine which changes state once every time unit. Each time that a state i is entered, a speech vector o is generated with an output probability b(o). The transition from state i to state j has a transition probability aij. Figure 2 shows an example of this process where the six state models move through the state sequence 1,2,2,3,4,4,5,6 in order to generate the sequence o1 to o6.

The probability of a sequence O=o1 to o6 being generated by a given model moving through the state sequence X is the product of the transition probabilities and the output probabilities. Of course, in practice, only the observation sequence O is measured and the underlying state sequence X is hidden. This is why the model is called a Hidden Markov Model.

Thus a different Hidden Markov Model is built for each sequence of speech elements one wishes to recognize. The list of sequences for which a Model has been built is called a lexica and can be represented by a file called the dictionary. A dictionary is thus a file including a list of sequences to recognize and at least one pronunciation, represented with a serie of speech elements, associated with each sequence in the list.

A decoder bloc 12 then determines the most likely sequence 14 spoken by the speaker given the successive speech elements and the probabilities 10 delivered by the pattern matching bloc that the sequence corresponds to each Model. A Viterbi decoding system can be used for this function; the search is usually constrained through a constraint network 4.

Figure 6 illustrates the architecture of a speech recognition system according to the invention. The system comprises a recognition module 5. The recognition module 5 may be based on standard tools, such as the HTK tool for example, and uses a plurality of libraries (not shown) for controlling the interfaces with the outside world and for supplementary functions.

The recognition module 5 performs the recognition task preferably with sets of Hidden Markov Models 36, 37. In the illustrated example, two sets of models are provided. The first set defined by the file 36 includes models of German phones trained with native German speakers. The second set defined by the file 37 includes models of French phones trained with native German speakers. For example, a model in this set 37 could represent the usual pronunciation of the French phone [ã] by German native speakers.

This separation of the two sets of models in two files 36, 37 is for illustrative purpose only; obviously, the two sets could be combined into a single file, are written into several files.

In practice, this means that the original set of models of German phones in the file 34 is extended with a set of models of French phones spoken by German speakers.

A dictionary 3 indicates the pronunciation associated with a plurality of speech sequences, for example words. In the dictionary file, the pronunciation of each speech element in the different sequences is identified by three parameters:
1. The typical phone p
2. The typical language the phone belongs to, for example French (.FR)
3. The lingual speakers that have been used to train the phone, for example German speakers (.DE)

An example of indication of a of model in the dictionary will be [a].FR.GE, this means that the chosen phone model corresponds to the French [a] pronounced by a set of German speakers.

An entry 30 corresponding to the word GUISAN in the dictionary would be for example:
GUISANPLATZ [g].DE.DE,[i].DE.DE,[z].DE.DE,[ã].FR.DE

This entry 30 in the dictionary 3 thus mixes standard acoustic German speech models [g].DE.DE,[i].DE.DE,[z].DE.DE with a cross-lingual model of the French [ã] spoken by German native speakers.

The dictionary can be automatically generated from a lexica that indicates the linguistic origin of each sequence, for example each word. The lexica would for instance include an entry for the word GUISAN and indicate that this is a French name. A software tool can then automatically build the above-described entry in the dictionary by selecting German speech models for phones that exist in German and cross-lingual speech models for French phones.

The supplementary speech models 37 that are needed can be built from scratch and trained with non-native speakers. In order to reduce the costs, a speech model adaptation method can be used in order to adapt existing models with the scarce available data of the target language. This adaptation may be performed using existing tools or methods such as MLLR or MAP.

It should be noted that in the case of cross-lingual speech models, the grammar that is used by the speech recognition module is specific to the linguistic origin of the speaker. For instance, if the speaker is a German speaker, the grammar needed to recognize the mixed lingual words is composed of German models for German phones and German cross-lingual models for the French phones. If the system is used by a French speaker, then the grammar will be composed of French models of the French phones and French cross-lingual models of the German phones.

When the origin of the speaker is unknown, one could recognize the two models in parallel and take the maximum likelihood score. In this case the grammar will contain both versions French + cross-lingual French and/or German + cross-lingual German. However, this has the side effect of increasing the processing time. Therefore, in a preferred embodiment, the speaker's native language is automatically determined in order to select the best suited set of models. This automatic determination can be performed by using the caller's phone number (CLI, caller Line Identification) or preferably with a neural network or sets of trained HMMs.

The method of the invention thus has the advantage of using models of speech elements from two different languages, but trained with speakers of a common language, for the recognition of single entries in a dictionary. It is even possible to use models triphones mixing at least one cross-lingual phone model with a native phone model.

The invention is as well related to a computer program product comprising a dictionary file 3, said dictionary file 3 including a list of speech sequences to recognize and a plurality of models associated with each sequence in the list, wherein at least one sequence is associated with a model based both on native models 36 built with speakers native of a first language and on cross-lingual models 37 for speech elements typical of a second language but built from a set of the first language speakers. Said plurality of models can comprise a set of trained Hidden Markov Models

## Claims

1. A method for recognizing a sequence (30) of speech elements spoken by a first language native speaker, a plurality of sequences being listed as entries in a dictionary, the method comprising the steps of:
building native acoustic speech element models (36) for speech elements belonging to said first language,
building cross-lingual acoustic speech element model (37) for speech elements belonging to a second language,
said cross-lingual speech elements (37) being built from a set of first language speakers,
**characterized in that**:
at least an entry in said dictionary mixes native acoustic speech element models (36) with a cross-lingual speech element model,
and **in that** said native models (36) and said cross-lingual models (37) are both used for the recognition of the corresponding sequence.

2. The method of claim 1, wherein said speech elements include phones.

3. The method according to one of the claims 1 to 2-, wherein said sequence (30) corresponds to a word.

4. The method according to claim 1, wherein said dictionary (3) is a file comprising a plurality of words (30) and a plurality of sequences of phones corresponding to the pronunciation of said words, each word being associated with at least one sequence of phones, wherein at least one sequence of phones comprises native phones and cross-lingual phones.

5. The method according to claim 4, wherein at least one said pronunciation in said dictionary (3) is associated with a first parameter indicating the typical language the phone belongs to, and with a second parameter indicating the language of the speaker's with which the phone model has been trained.

6. The method according to one of the claims 1 to 5, further comprising a step of generating said dictionary (3) from a lexica that indicates the linguistic origin of at least some sequences in said dictionary (3).

7. The method according to one of the claims 1 to 6, further comprising a step of automatically determining said speaker's native language.

8. Directory assistance service using the method of one of the preceding claims for recognising caller's speech requests.

9. Computer program product comprising a dictionary file (3), said dictionary file (3) including a list of speech sequences to recognize and a plurality of models associated with each sequence in the list, wherein at least one sequence is associated with a model based both on native acoustic models (36) built with speakers native of a first language and on cross-lingual acoustic models (37) for speech elements typical of a second language but built from a set of the first language speakers.

10. Computer program product according to claim 9, wherein said plurality of models comprises set of trained Hidden Markov Models.

## Patentansprüche

1. Verfahren zur Erkennung einer Sequenz (30) von Sprachelementen, die von einem Sprecher in einer ersten Sprache ausgesprochen werden, die als Muttersprache des Sprechers gilt, wobei mehrere Sequenzen als Eintrag in einem Wörterbuch aufgelistet werden, wobei das Verfahren die folgenden Schritte enthält:
Aufbauen originaler akustischer Sprachelementmodelle (36) für Sprachelemente, die zur besagten ersten Sprache gehören
Aufbauen mehrsprachiger akustischer Sprachelementmodelle (37) für Sprachelemente, die zu einer zweiten Sprache gehören,
wobei die besagten mehrsprachigen Sprachelemente (37) von einem Satz von Sprechern des ersten Sprache aufgebaut wird,
**dadurch gekennzeichnet dass**
wenigstens ein Eintrag im besagten Wörterbuch originale akustische Sprachelementmodelle (36) mit einem mehrsprachigen Sprachelementmodell mischt und dass
die besagten originalen akustischen Sprachelementmodelle (36) und die besagten mehrsprachigen Modelle (37) beide zur Erkennung der korrespondierenden Sequenzen benutzt werden.

2. Verfahren entsprechend Anspruch 1, in welchem die besagten Sprachelemente Phonemen umfassen.

3. Verfahren gemäss einem der Ansprüche 1 oder 2, in welchem die besagte Sequenz einem Wort entspricht.

4. Verfahren gemäss Anspruch 1, in welchem das besagte Wörterbuch ein Dossier ist, das mehrere Wörter (30) und mehrere Phonemsequenzen enthält, die der Aussprache der besagten Wörter entsprechen, wobei jedes Wort wenigstens einer Phonemsequenz zugeordnet wird, wobei wenigstens eine Phonemsequenz originale Phonems und mehrsprachige Phonems umfasst.

5. Verfahren gemäss Anspruch 4, in welchem wenigstens eine der besagten Aussprachen im besagten Wörterbuch (3) einem ersten Parameter zugeordnet wird, der die typische Sprache zu welchem das Phonem gehört angibt und einem zweiten Parameter zugeordnet wird, der der Sprache des Sprechers mit welcher das Phonemmodell trainiert worden ist, angibt.

6. Verfahren gemäss einem der Ansprüche 1 bis 5, weiter umfassend einen Schritt für das Anlegen des besagten Wörterbuchs aus einem Lexikon, das den Sprachenursprung von mindestens einigen Sequenzen im besagten Wörterbuch (3) angibt.

7. Verfahren gemäss einem der Ansprüche 1 bis 6, weiter umfassend einen Schritt für die automatische Bestimmung der besagten Muttersprache des Sprechers.

8. Verzeichnishilfsdienst, der das Verfahren entsprechend einem der vorangegangenen Ansprüche benutzt, um Sprachanfragen von Anrufenden zu erkennen.

9. Computerprogrammprodukt umfassend ein Wörterbuchdossier (3), wobei das besagte Wörterbuchdossier eine Sprachsequenzenliste umfasst, die erkannt werden muss und mehrere Modelle, die jeder Sequenz in der Liste zugeordnet werden, in welchem wenigstens eine Sequenz einem Modell zugeordnet wird, das auf beide originale akustische Modelle (36), die mit Sprechern dessen Muttersprache eine erste Sprache ist, und auf einem mehrsprachigen Modellen für Sprachelemente, die typisch für eine zweite Sprache sind, die aber mit einem Satz von Sprechern des ersten Sprache aufgebaut worden sind, basiert ist.

10. Computerprogrammprodukt gemäss Anspruch 9, in welchem die besagten mehreren Modelle einen Satz von trainierten verborgenen Markov Modellen umfasst.

## Revendications

1. Une méthode de reconnaissance d'une séquence d'éléments vocaux (30) prononcés par un locuteur d'une première langue materneiie, une piuraiité de séquences étant listées comme entrées dans un dictionnaire, la méthode comprenant les étapes suivantes:
construire des modèles d'éléments vocaux acoustiques originels (36) pour les éléments vocaux appartenant à ladite première langue
construire des modèles d'éléments vocaux acoustiques multi-langue (37) pour les éléments vocaux appartenant à une seconde langue
lesdits éléments vocaux acoustiques multi-langue (37) étant construits à partir d'un ensemble de locuteurs parlant la première langue
**caractérisée en ce que**
au moins une entrée dans ledit dictionnaire mélange des modèles d'éléments vocaux acoustiques de la première langue (36) avec un modèle d'élément vocal multi-langue (37)
et que lesdits modèles d'éléments vocaux acoustiques de la première langue (36) et les modèles d'élément vocaux multi-langue (37) sont utilisés tous deux pour la reconnaissance de la séquence correspondante.

2. La méthode de la revendication 1, dans laquelle lesdits éléments vocaux incluent des phonèmes.

3. La méthode de l'une des revendications 1 ou 2, dans laquelle ladite séquence (30) correspond à un mot.

4. La méthode de la revendication 1, dans laquelle ledit dictionnaire (3) est un fichier comprenant une pluralité de mots (30) et une pluralité de séquences de phonèmes correspondant à la prononciation desdits mots, chaque mot étant associé à au moins une séquence de phonèmes, au moins une séquence de phonèmes comprenant des phonèmes de langue maternelle et des phonèmes multi-langue.

5. La méthode selon la revendication 4, dans laquelle au moins une dite prononciation dans ledit dictionnaire (3) est associée à un premier paramètre indiquant la langue typique à laquelle le phonème appartient, et à un second paramètre indiquant la langue de la personne avec laquelle le modèle de phonème a été entraîné.

6. La méthode selon l'une des revendications 1 à 5, comprenant de plus une étape de génération dudit dictionnaire (3) depuis un lexique qui indique l'origine linguistique d'au moins certaines séquences dans ledit dictionnaire (3).

7. La méthode selon l'une des revendications 1 à 6, comprenant de plus une étape pour déterminer automatiquement la langue maternelle du locuteur.

8. Un service d'assistance répertoire utilisant la méthode de l'une des revendications précédentes pour reconnaître des requêtes vocales d'un appelant.

9. Un programme logiciel comprenant un fichier dictionnaire (3), ledit fichier dictionnaire (3) incluant une liste de séquences vocales à reconnaître et une pluralité de modèles associés à chaque séquence dans la liste, au moins une séquence étant associée à un modèle basé à la fois sur des modèles acoustiques originels (36) construits avec des locuteurs d'une première langue maternelle et sur des modèles multi-langue pour des éléments vocaux typiques d'une deuxième langue mais construit à partir d'un ensemble de locuteurs de la première langue.

10. Programme logiciel selon la revendication 9, dans lequel ladite pluralité de modèles comprend un ensemble de modèles de Markov cachés entraînés.
